# EUROPEAN PATENT APPLICATION

(11) **EP 1 862 840 A1**
(43) Date of publication of application: **05.12.2007**
(21) Application number: 06114636.1
(22) Date of filing: 29.05.2006
(51) Int. Cl.: G02B 27/00, F41G 1/00, G02B 23/04, G02B 23/14

(54) **Image capturing device**

(71) Applicant: SAAB AB, 581 88 Linköping (SE)
(72) Inventor: Manley, Håkan, 575 34 Eksjö (SE)
(74) Representative: Norberg, Charlotte

(57) **Abstract**

The present invention relates to an image capturing device comprising an optical unit arranged to receive an image of a scene and to convey the scene image to an area outside the image capturing device designed for the eye or eyes of a user looking into the image capturing device, and a second image capturing unit (5) arranged to capture the image of the scene. The device is characterized in that it comprises a first image capturing unit (7) arranged to capture an image of the eye area (10).

The present invention further comprises a method for registering the behavior of a person seeking through a scene.

## Description

### TECHNICAL AREA

The present invention relates to an image capturing device comprising an optical unit arranged to receive an image of a scene and to convey the scene image to an area outside the image capturing device designed for the eye or eyes of a user looking into the image capturing device, and a second image capturing unit arranged to capture the image of the scene.

The present invention further comprises a method for registering the behavior of a person seeking through a scene in accordance with the preamble of claim 10.

### DESCRIPTION OF PRIOR ART

It is known to mount at the sight of a weapon a device arranged to record a scene visible through the sight at the same time as the scene is visible to a user looking through the sight. This device comprises a device such as a beam splitter arranged to partly transmit the image of the scene to the eye of the user and to partly reflect the image to a imaging capturing device, e.g. a video recorder. Accordingly, by studying the recording, the methods used by a person seeking through a terrain via the sight can be determined. This is a very practical tool in education of soldiers.

However, it is not today possible to follow the scanning methods used by a person seeking with the eye(s) through the scene visible through the sight.

There is also today technology available for controlling equipment such as controls on a control panel with the eyes.

### DESCRIPTION OF THE INVENTION

One object of the present invention is to make it possible to follow the methods used in seeking through a dynamic scene.

This has been achieved according to one embodiment of the present invention by means of an image capturing device comprising an optical device arranged to receive an image of a scene and to convey the scene image to an area outside the image capturing device designed for the eye or eyes of a user looking into the image capturing device, and a second image capturing unit arranged to capture the image of the scene. The device is characterized in that it also comprises a first image capturing unit arranged to capture an image of the eye area.

In accordance with one preferred embodiment of the invention, a processing unit is arranged to put together the images of the first and second image capturing units to a presentation image comprising the scene image with the position(s) of the focus of the eye or eyes marked. Preferably, the processing unit is arranged to form a track of continuously updated eye positions in the presentation image representing the eye movements during a predetermined time interval, wherein the conformation of the track can be a function of time during the time interval. In order to evaluate where in the scene image the person looking into the image capturing device rests his/her eyes in seeking through the scene, the track has in one preferred embodiment a predetermined conformation at focus points wherein the estimated speed is substantially zero for a predetermined time period.

In accordance with one preferred embodiment of the invention, the optical unit comprises at least one beam splitting unit arranged to divert a part of the beam representing the scene image to the second image capturing unit. The beam splitting unit can for example comprise a dichroic mirror, a metallized layer, a membrane etc.

It may be necessary to illuminate the eye area in order to provide an acceptable image of the eye movements; the device comprises then in one example an illuminator arranged to illuminate the eye area. The illuminator is for example arranged to emit infrared radiation.

In one application, the image capturing device is arranged at a weapon comprising a sight wherein an aperture of the image capturing device receiving the image of the scene is facing the sight. The sight is for example an optical sight, a video sight or a simulating sight arranged to display a recorded or animated scenario.

In another application the image capturing device is attached to a thermal sight for example used in searching for missing persons from helicopter.

In yet another application the image capturing device is used in practicing seeking through a scene in order to discriminate threats for example in a crowd and in order to determine the extent of the threat; this can be used for example in police, military or guard education. This may also be used in determining if a person is fit to possess a drivers' license, in training of goalkeepers in for example ice hockey, etc

The present invention is also related to a method for registering the behavior of a person seeking through a scene comprising the step of registering an image of the scene. The method is characterized by the steps of registering the directions/movement of the eye or eyes of a person seeking through the scene to register wherein the scene the person is looking, and forming a processed presentation image by the image of the scene and the image of the eye or eyes such that the directions/movement/focus position of the eye is marked in the image of the scene.

The device and method according to the invention provides a tool for learning a method of seeking through and evaluating a scene in front of a person looking into the image capturing device. This is important as it is, for example in the application related to aiming of a weapon, critical to be the one firing well-aimed ammunition at the first shot. The need for learning a method for seeking through and evaluating a scene is even increased with regard to the scenarios taken place today, wherein a third part is present, who needs to be discriminated from potential threats and targets. If the firer chooses to rest the eye on one object in the scene, he runs the risk of being surprised from another direction. Generally, the device and method find application in training or validation of a situation wherein the field of view is dynamic and wherein there is a requirement of acting intuitively.

Further, the present invention may not only be used in practice but also for validation. The latter means the behavior in seeking through a dynamic scene can be evaluated so as to determine if the behavior can be approved.

### BRIEF DESCRIPTION OF FIGURES

Fig. 1 shows a side view of an optical device according to one embodiment of the present invention.
Fig. 2 shows a view from above of the optical device in fig 1.
Fig 3 shows a block diagram over an example of a system in accordance with the present invention.
Fig 4 shows a side view of an arrangement including the optical device of fig 1 mounted in front of a binocular sight.
Fig 5 shows a front view of the arrangement in fig 4.
Fig 6 shows a display unit of the system in fig 3.
Fig. 7 shows a side view of an optical device according to an alternative embodiment of the present invention.

### PREFERRED EMBODIMENTS

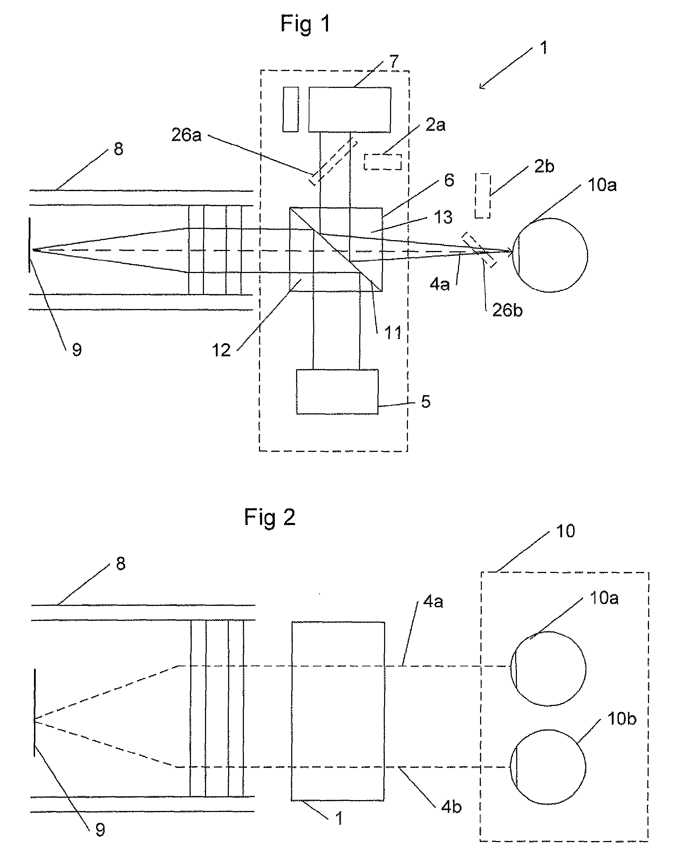

Figs 1 and 2 illustrate very schematically the design of an image capturing device 1 mounted onto a sight 8 such that the image capturing device 1 is interposed between the sight 8 and an area 10 for the eyes 10a, 14b of a person looking through the sight. The sight 8 is in this illustrated embodiment a binocular sight. In an alternative embodiment (not shown) the sight is a monocular sight. In yet another alternative embodiment (not shown) the sight is a reflex sight. The image capturing device 1 is mountable in front of the sight 8 so that a person looking into the sight will view an image generated in an image plane 9 of the sight and conveyed by the sight. The image represents a scene visible through the sight 8. In an alternative example (not shown), wherein the image capturing device 1 is not mounted onto a sight, the image plane 9 is for example a display unit arranged to display a recorded or animated scenario such as a shooting scenario.

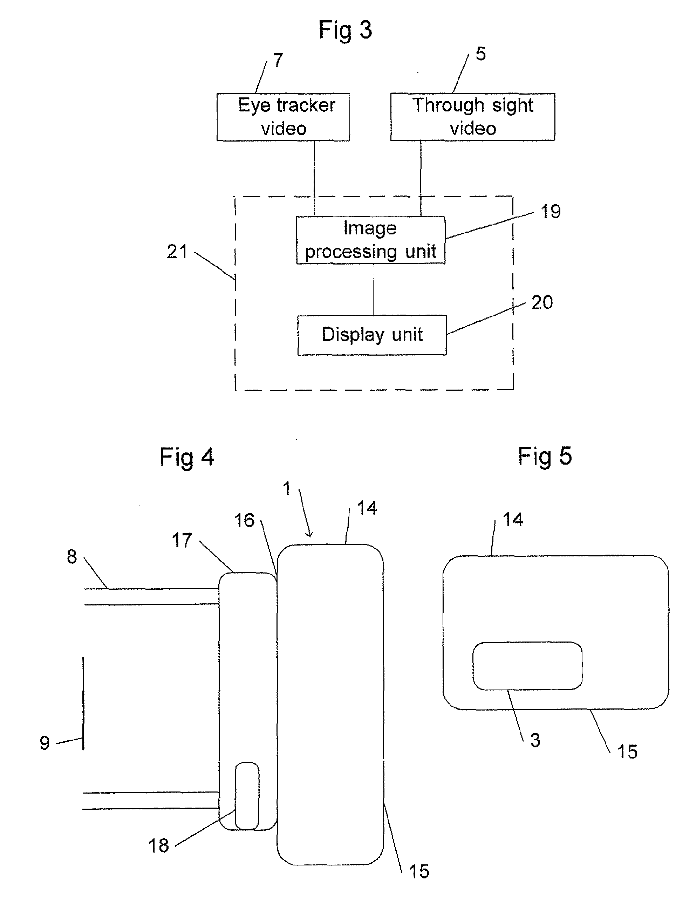

The beams of the scene image enter the image capturing device 1 via a first aperture (not shown). An optical unit, in this illustrated example in the form of beam splitter 6, of the image capturing device 1 is arranged to in part reflect the light beam forming the scene image 9 and project the reflected light beams onto a scene image capturing unit 5, such as a video camera. The remaining part of the light beam, except for losses, is transmitted through the beam splitter arrangement 6 and are conveyed through a second aperture 3 (see fig 5) of the image capturing device 1,

In detail, a semi-transparent, tilted surface 11 of the beam splitter 6 is arranged to reflect the image 9 conveyed by the sight and to project the scene image onto the scene image capturing unit 5. As is understood from the above, the semi-transparent surface 11 is further arranged to allow the image 9 to pass through such that the image 9 is visible at the eye area 10. The amount of light reflected by the mirror and the amount of light transmitted through the surface 11 is determined by the transmittance and the reflectance of the surface 11. In accordance with one example, the reflectance is 20-40% and the transmittance is 60-80%. As is apparent from the above, an image of the scene in front of the sight is captured by for example a video camera while the person looking into the sight simultaneously views the scene. Thereby, it is possible, by studying the captured images, to follow the aiming behavior of a person using the sight to aim a weapon by studying the video recording. The captured images can be studied either in real time or in after action review. Accordingly, the methods used by a person seeking through a terrain can be followed and logged.

In the embodiment shown in figs 1 and 2, the beam splitter arrangement 6 comprises two pieces of glass 12, 13 with triangular cross-sectional shape, which are joined together by means of gluing so as to jointly form an element with rectangular cross-sectional shape. A mirror coating forming said semi-transparent surface 11 is arranged in the joint between the pieces of glass 12, 13. The mirror coating 11 consists in one example of a separate layer-shaped element to be integrated with one of the pieces of glass. Other designs of the beam splitter arrangement 6 than the one described above, are of course also possible. The key issue is that the beam splitter will function as a semi-transparent mirror to visible light beams in the manner indicated above.

As is apparent from fig 2 the beam splitter arrangement 6 has such an extension that it covers the fields of sight 4a, 4b for both eyes 10a, 10b of a person looking into the sight 8. However, it is sufficient that the beam splitter arrangement 6 has such an extension that it only covers the field of view of the sight 4a, or a part of it, for one of the eyes of a person looking into the sight.

In fig 1, an eye movement image capturing unit 7 is mounted in the beam path of a beam originating from the eye of a user looking into the sight, and reflected in the semi-transparent mirror coating 11. As discussed above, the amount of light reflected by the mirror and the amount of light transmitted through the mirror 11 is determined by the transmittance and the reflectance of the mirror 11. The eye movement image capturing unit 7 is for example arranged to track the movements or direction of the of the pupil of at least one of the eyes. Thereby it is possible not only to follow the movement of the sight over the terrain but also to follow the movements of the eye within the scene visible through the sight. Thereby the method used by the person seeking through the image 9 can be evaluated and it can be determined where in the image 9 the person looking through the sight places his/her focus points. The semi-transparent mirror 11 is in one example a dichroic mirror. In another example is the semi-transparent mirror 11 a metallised layer. In yet another example is the semi-transparent mirror a membrane.

An illuminator 2, such as an IR illuminator, arranged to emit infrared light is arranged within the image capturing device 1 such as to illuminate at least a part of the eye area 10 such that at least one of the eyes 10a, 10b of the person looking through the sight is illuminated. In the illustrated embodiment the illuminator 2 is mounted in close relationship to the eye movement image capturing unit 7. Alternatively, the illuminator 2 is integrated in the eye movement image capturing unit 7. The light from the IR illuminator is then reflected by the semi-transparent mirror 11 into the eye of the person looking into the sight. Alternatively, a beam splitter 26a is arranged in the beam path from the eye movement image capturing unit 7 to the beam splitter arrangement 6, in which case an alternatively positioned illuminator 2a illuminates the beam splitter 26a so as to reflect the illuminated light beam towards the beam splitter arrangement 6. In this alternative example, the scene image capturing unit 5 is preferably provided with a filter so as to block the light from the illuminator 2a. In yet an alternative example, a beam splitter 26b is arranged in the beam path from the beam splitter arrangement 6 to the eye area 10, in which case an alternatively positioned illuminator 2b illuminates the beam splitter 26b so as to reflect the illuminated light beam towards the eye area 10.

In a not illustrated example, the illuminator is arranged at a front wall 15 of a casing 14 (see Figs 4 and 5) enclosing the image capturing device 1 and directed at the eye area 10. The IR illuminator 2 may only be required in use in a somewhat dark environment.

In fig 3 a processing unit 19 is arranged to superimpose the eye movement images from the eye movement image capturing unit 7 on the corresponding scene images from the scene image capturing unit 5 in order to provide a presentation image. In one example, the images registered by the eye movement image capturing unit 7 are processed in order to determine the coordinates of the pupil in the images captured by the eye movement image capturing unit 7. The coordinates are then marked in the images of the scene image capturing unit 5. The presentation image can be displayed by means of a display unit 20 connected to the processing unit 19. In accordance with one example of the invention, the processing unit 19 and the display unit 20 are comprised in a computer 21 arranged outside the image capturing device 1. The scene image capturing unit 5 and the eye movement image capturing unit 7 are then communicating with the computer 21 for example by means of IR communication, Bluetooth or electrical cable(s).

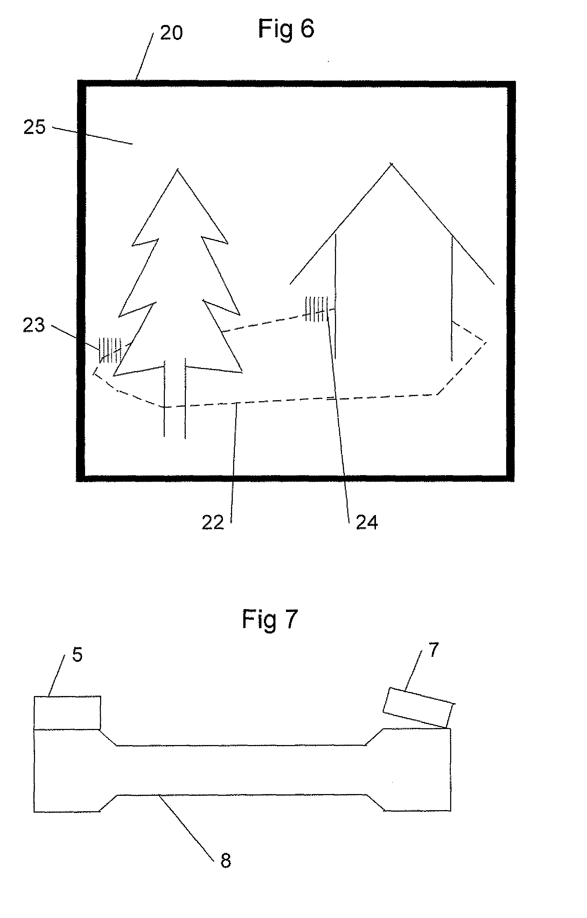

In fig 6, an example of a presentation image of the display unit 20 shows a scene image 25 wherein the eye movements during a given time period are marked by means of a trail 22. In one example the conformation of the trail 22 indicates the speed of the eye movements. For example, the speed of the eye movements can be indicated by the colour of the trail. Especially, it is preferred that focus points 23, 24, i.e. positions in the scene, wherein the eyes are resting for a period of time, are indicated either by the colour of the trail or by other means such as a symbol placed at the trail. The size of the symbol indicates in one example how long time the eye rests at the focus point. In order to provide the feature of amending the conformation of the trail 22, the processing unit 19 is in one example arranged to determine the difference between the position of the eyes in each new position determination in relation to the position in a preceding position determination. The conformation of the trail between said positions is determined in accordance with the position difference. The presentation on the display unit 20 is in one example performed in real time, wherein the trail is formed as the eyes move. In another example, the presentation image on the display unit 20 is shown after the eyes have scanned through the scene in after action review. In order to provide a correct placement of the trail 22 in the scene image 25, it is important that the eyes are correctly placed in the eye area 10. A displacement of the eyes in relation to the correct placement of the eyes will lead to a corresponding displacement of the trail 22 in the scene image 25. Further, if the distance to the eye is to long or to short, this will lead to an error in the scale of the trail 22.

In an extended example (not shown), the display unit 20 is also arranged to separately show the eye movement images from the eye movement image capturing unit 7 next to, under or above the scene image 25.

Figs 4 and 5 show the image capturing device 1 mounted in front of the exit aperture of the sight 8, preferably a binocular sight. In the embodiment shown in fig 4, the image capturing device 1 comprises a casing 14 enclosing at least the scene image capturing unit 5, the eye movement image capturing unit 7 and the beam splitter arrangement 6. An aperture 3 is arranged at a front wall 15 of the casing, through which aperture 3 a person looking into the sight 8 is intended to direct his eyes. This aperture 3 can with advantage be rectangular and can for instance have a size of about 35x80mm. This shape and size of the aperture 3 is sufficient for allowing a person to look comfortably into the sight via the aperture 3 with both eyes. In one example the front wall 15 is provided with a supporting element (not shown) in the vicinity of the aperture, said supporting element being arranged to support the head of the person looking into the aperture 3 so that the eyes are correctly placed in the eye area 10 and accordingly, so the trail 22 is correctly located in the scene image 25. In the illustrated embodiment, wherein the aperture 3 of the image capturing device 1 has a smaller extension than the exit aperture of the sight, which normally has a diameter in the order of 80mm for a binocular sight, a part of the space directly in front of the exit aperture of the sight can be used for accommodating the components included in the image capturing device 1, whereby the device can be made more compact and space-saving. At the rear wall of the casing, a not shown aperture is arranged, which aperture has essentially the same shape and size as the aperture 3 at the front wall 15 of the casing and which is arranged coaxially with this aperture. The image capturing device 1 according to the embodiment shown in fig 4 further comprises a tube-shaped holding member 17, which is connected to the casing 14 and protrudes from the rear wall 16 of the casing. The tube-shaped holding member has an inner diameter which is somewhat larger than the outer diameter of the sight, at the front end of the sight 8, so that the image capturing device 1 can be attached to the sight 8 by applying the holding member 17 so that it encloses the front part of the sight 8. A quick-action fastener 18, which is attached to the holding member 17, is adapted to secure the image capturing device 1 to the sight 8.

The image capturing device 1 is suitably supplied with electric current from a separate power supply (not shown) arranged to supply the image capturing units 5 and 7. The power supply is optionally placed outside the image capturing device 1.

In an not shown example the image capturing device 1 is formed integrally with the sight 8.

In the alternative embodiment in fig 7, the scene image capturing unit 5 is mounted at the exterior of the sight 8. The scene image capturing unit is arranged in relation to the sight 8 such that the scene captured by the scene image capturing unit 5 substantially coincides with the scene visible through the sight 8. The eye movement image capturing unit 7 with the illuminator 2 is also mounted at the exterior of the sight 8. The eye movement image capturing unit 7 is arranged in relation to the eye area 10 such that at least one eye of a person looking into the sight is captured by the eye movement image capturing unit. The image processing unit 19 and display unit 20 (not shown) are either mounted at the sight 8 or arranged separated from the sight. In the latter case, the processing unit 19 and the display unit 20 are in one example comprised in a computer 21. The scene image capturing unit 5 and the eye movement image capturing unit 7 are then communicating with the computer 21 for example by means of IR communication, Bluetooth or electrical cable(s).

The invention is of course not in any way limited to the preferred embodiments described above. On the contrary, several possibilities of modification thereof should be apparent to a person skilled in the art without therefore deviating from the basic idea of the invention as defined in the appended claims.

## Claims

1. Image capturing device comprising
- an optical unit (6) arranged to receive an image (9) of a scene and to convey the scene image to an area (10) outside the image capturing device designed for the eye or eyes of a user looking into the image capturing device, and
- a second image capturing unit (5) arranged to capture the image of the scene,
**characterized in that** it comprises a first image capturing unit (7) arranged to capture an image of the eye area (10).

2. Image capturing device according to claim 1, **characterized in that** a processing unit (19) is arranged to put together the images of the first and second image capturing units (7, 5) to a presentation image comprising the scene image with the position(s) of the eye or eyes marked.

3. Image capturing device according to claim 2, **characterized in that** the processing unit (19) is arranged to form a track of continuously determined eye positions in the presentation image representing the eye movements during a predetermined time interval.

4. Image capturing device according to claim 3, **characterized in that** the conformation of the track is variable along its extension at least partly in dependence of the variation in the speed of the eye movements along the extension of the track.

5. Image capturing device according to claim 4, **characterized in that** the track has a predetermined conformation at focus points wherein the speed is substantially zero for a predetermined time period.

6. Image capturing device (1) according to claim 1, **characterized in that** the optical unit (6) comprises at least one beam splitting unit arranged to divert a part of the beam representing the scene image to the second image capturing unit.

7. Image capturing device (1) according to claim 6, **characterized in that** the beam splitting unit further is arranged to divert the image of the eye area (10) to the first image capturing unit.

8. Image capturing device (1) according to claim 1, **characterized in that** it comprises an illuminator (2) arranged to illuminate the eye area (10).

9. Weapon comprising a sight (8) and an image capturing device (1) according to any of the preceding claims, **characterized in that** an aperture of the image capturing device arranged to receive the image of the scene faces the sight (8).

10. Method for registering the behavior of a person seeking through scene comprising the step of registering an image (9) of the scene, **characterized by** the steps of
- registering the directions or movement of the eye or eyes of a person seeking through the scene, and
- forming a processed presentation image by the image of the scene and the image of the eye or eyes such that the directions/movement of the eye is marked in the image of the scene.
